# EUROPÄISCHE PATENTSCHRIFT

(11) **EP 3 052 362 B1**
(45) Veröffentlichungstag und Bekanntmachung des Hinweises auf die Patenterteilung: **21.04.2021**
(21) Anmeldenummer: 14780452.0
(22) Anmeldetag: 30.09.2014
(51) Int. Cl.: B60W 50/14, B60W 30/12, B60W 30/16, B60K 35/00

(54) **VORRICHTUNG FÜR EIN FAHRZEUG**
DEVICE FOR A VEHICLE
DISPOSITIF POUR UN VÉHICULE

(30) Priorität: 01.10.2013 DE 102013110867
(43) Veröffentlichungstag der Anmeldung: 10.08.2016
(73) Patentinhaber: VOLKSWAGEN AKTIENGESELLSCHAFT, 38440 Wolfsburg (DE)
(72) Erfinder: KLEEN, Andro, 38100 Braunschweig (DE); SCHÄFER, Helge, 31275 Lehrte Kolshorn (DE); RICKNÄS, Daniel, S-116 64 Stockholm (SE); MEINECKE, Marc-Michael, 38524 Sassenburg (DE); DEGERMANN, Pär, S-613 36 Oxelösund (SE)
(74) Vertreter: Sticht, Andreas
(86) Internationale Anmeldenummer: PCT/EP2014/070931
(87) Internationale Veröffentlichungsnummer: WO 2015/049235

(56) Entgegenhaltungen:
- WO-A2-2013/034347
- DE-A1-102005 039 103
- DE-A1-102011 082 375
- DE-A1-102011 082 475
- DE-A1-102011 082 475
- DE-A1-102012 210 145
- DE-A1-102012 210 145
- US-B1- 8 346 426
- US-B1- 8 346 426

## Beschreibung

Die vorliegende Erfindung betrifft eine Vorrichtung für ein Fahrzeug, welches zum zumindest teilweisen automatischen Fahren ausgestaltet ist.

Die DE 100 07 501 A1 offenbart die Erfassung und Überwachung einer Mehrzahl von vorausfahrenden Fahrzeugen. Dabei wird für die vorausfahrenden Fahrzeuge jeweils deren Spur, Geschwindigkeit und/oder Abstand zum eigenen Fahrzeug ermittelt und abhängig davon das eigene Fahrzeug hinsichtlich seiner Momentangeschwindigkeit angepasst. US 8 346 426 B1, DE 10 2012 210145 A1 und DE 10 2005 039103 A1 offenbaren Fahrerassistenzsysteme mit Displays zur Anzeige relevanter Informationen.

Das automatische Fahren eines Fahrzeugs im Stau erlaubt dem Fahrer, sich Nebenbeschäftigungen zu widmen, während er auf dem Fahrersitz sitzt. Dabei muss der Fahrer zum einen in der Lage sein, die Fähigkeiten und Eigenschaften des automatisch fahrenden Fahrzeugs realistisch einzuschätzen, um sein Verhalten entsprechend anpassen zu können. Zum anderen muss der Fahrer in der Lage sein, die Situation des automatisch fahrenden Fahrzeugs korrekt einzuschätzen, um für den Fall, dass die Fahraufgabe an den Fahrer zurück übergeben wird, rasch und angemessen reagieren zu können.

Die vorliegende Erfindung stellt sich diesbezüglich die Aufgabe, den Fahrer dabei zu unterstützen.

Erfindungsgemäß wird diese Aufgabe durch eine Vorrichtung für ein Fahrzeug nach Anspruch 1 gelöst. Die abhängigen Ansprüche definieren bevorzugte Ausführungsformen der vorliegenden Erfindung.

Im Rahmen der vorliegenden Erfindung wird eine Vorrichtung für ein Fahrzeug bereitgestellt, wobei das Fahrzeug zum zumindest teilweisen automatischen Fahren ausgestaltet ist. Dabei umfasst die Vorrichtung einen Sensor, eine Steuerung und eine Anzeige. Der Sensor ist ausgestaltet, um Objekte im Umfeld des Fahrzeugs zu erfassen. Die Vorrichtung ist ausgestaltet, um diese Objekte zusammen mit dem Fahrzeug in animierter Form auf der Anzeige darzustellen.

Das Fahrzeug ist in der Lage, unter gewissen Voraussetzungen (beispielsweise im Stau auf der Autobahn) automatisch (d.h. ohne jegliche Betätigung seitens eines Menschen) zu fahren. Werden diese Voraussetzungen nicht erfüllt, kann das Fahrzeug ganz normal manuell vom Fahrer gefahren werden. Bei dem Sensor der Vorrichtung kann es sich erfindungsgemäß auch um mehrere Sensoren unterschiedlichen Typs (beispielsweise um eine Stereokamera, ein Radar und einen Ultraschall-Sensor) handeln. Darüber hinaus kann die Vorrichtung ausgestaltet sein, um Car2X-Daten zu empfangen und/oder zu senden.

Die animierte Darstellung der Objekte im Umfeld des Fahrzeugs zusammen mit dem eigenen Fahrzeug auf der Anzeige (z.B. dem Kombi-Display des Fahrzeugs) unterstützt den Fahrer, die aktuelle Situation, in welcher sich sein Fahrzeug befindet, rasch zu erfassen.

Insbesondere ist die erfindungsgemäße Vorrichtung ausgestaltet, um einen automatischen Fahrzustand, in welchem das Fahrzeug automatisch gefahren wird, zu erfassen. Dabei werden die Objekte zusammen mit dem eigenen Fahrzeug (nur) in dem automatischen Fahrzustand auf der Anzeige dargestellt.

Gerade in dem automatischen Fahrzustand kann der Fahrer leicht abgelenkt werden. Daher bietet die vorliegende Erfindung gerade in dem automatischen Fahrzustand die Möglichkeit, den Fahrer rasch und umfassend über die aktuelle Fahrsituation seines Fahrzeugs im Umfeld zu informieren.

Vorteilhafterweise ist die erfindungsgemäße Vorrichtung ausgestaltet, um die im Umfeld des Fahrzeugs erfassten Objekte anhand von Ausgaben des Sensors zu klassifizieren. Dadurch kann jedes auf der Anzeige dargestellte Objekt entsprechend seiner Klasse so dargestellt werden, dass es von Objekten einer anderen Klasse auf der Anzeige unterschieden werden kann.

Indem die Objekte auf der Anzeige hinsichtlich ihrer Klasse vom Fahrer unterschieden werden können, wird eine rasche Informierung über die aktuelle Fahrsituation weiter verbessert.

Dabei können die Klassen, in welche jedes dargestellte Objekt eingeteilt wird, zumindest zwei Klassen umfassen, welche einer Klassenmenge entstammen, die selbst folgende Klassen umfasst:
- Einen Personenkraftwagen (PKW). Darunter wird ein Kraftfahrzeug zur Personenbeförderung verstanden, welches zur Beförderung von nicht mehr als 9 (5) Personen ausgelegt ist.
- Einen Van. Darunter wird ein Kraftfahrzeug mit einer im Vergleich zum normalen PKW erhöhten Karosserie verstanden.
- Einen Lastkraftwagen (LKW).
- Ein feststehendes Hindernis, beispielsweise einen Baum oder ein Gebäude in der Nähe der Straße.
- Ein Verkehrsschild.
- Eine Brücke.
- Einen Tunnel.

In je mehr Klassen die auf der Anzeige dargestellten Objekte unterteilt werden, desto genauer kann die aktuelle Fahrsituation dem Fahrer dargestellt werden. Allerdings ist darauf zu achten, dass der Detailierungsgrad (d.h. die Anzahl der Klassen) nicht zu groß wird, da es dem Fahrer ansonsten unmöglich wird, die Fahrsituation rasch zu erfassen. Die Unterteilung in die Klassen PKW, LKW und Van erfolgt dabei beispielsweise anhand der von dem Sensor der Vorrichtung erfassten Größe des jeweiligen Fahrzeugs.

Darüber hinaus werden mittels des Sensors Zusatzinformationen der Objekte erfasst. Bezüglich ausgewählter der auf der Anzeige dargestellten Objekte wird zumindest eine Zusatzinformation dargestellt. Die zumindest eine Zusatzinformation gibt an, ob das Objekt (z.B. ein Fahrzeug, aber auch ein Verkehrsschild) eine betriebsfähige Car2X-Technik aufweist.

Weitere Zusatzinformationen können einer Zusatzinformation aus folgender Zusatzinformationsmenge entsprechen:
- Eine aktuelle Geschwindigkeit eines sich bewegenden Objekts (insbesondere eines Fahrzeugs).
- Eine aktuelle Differenzgeschwindigkeit zwischen dem sich bewegenden Objekt und dem Fahrzeug.
- Die Ausmaße (d.h. Länge, Breite und/oder Höhe) des sich bewegenden Objekts.
- Eine Straßenbreite der aktuell von dem Fahrzeug befahrenen Straße, wobei insbesondere die Breite der Straße an der engsten Stelle in einem Straßenabschnitt vor dem Fahrzeug von Interesse ist. Dabei wird unter einer Straßenbreite auch eine Verengung der Straße durch Schilder oder Bäume verstanden.
- Eine Höhe einer Durchfahrt durch eine Brücke oder einen Tunnel, welche ebenfalls als entsprechend klassifiziertes Objekt auf der Anzeige dargestellt werden.

Die Zusatzinformation kann auch eine Warnung umfassen, wenn beispielsweise eine Straßenbreite eine kritische Abmessung unterschreitet.

Insbesondere ist die Vorrichtung ausgestaltet, um zumindest eines der auf der Anzeige dargestellten Objekte als so genanntes Regelobjekt zu identifizieren und um dieses Regelobjekt unterschiedlich zu den anderen auf der Anzeige dargestellten Objekte abzubilden. Dabei wird unter einem Regelobjekt ein Objekt verstanden, welches die Ursache oder den Grund für ein aktuell durchgeführtes oder in naher Zukunft durchzuführendes Fahrmanöver des Fahrzeugs darstellt.

Indem das jeweilige Regelobjekt auf der Anzeige kenntlich gemacht wird, kann ein entsprechendes vom Fahrzeug automatisch durchgeführtes Fahrmanöver (beispielsweise ein Ausweichen) vom Fahrer besser nachvollzogen werden.

Objekte (insbesondere Fahrzeuge) auf einer bestimmten Fahrspur neben der aktuellen Fahrspur des Fahrzeugs werden abstrahiert in Form einer grafischen Darstellung auf der Anzeige dargestellt. Dabei umfasst die grafische Darstellung eine Information über einen Verkehr auf der bestimmten Fahrspur. Die Information entspricht dabei einer Information aus folgender Informationsmenge:
- Eine Geschwindigkeit, mit welcher sich die Fahrzeuge auf der bestimmten Fahrspur im Durchschnitt bewegen.
- Ein Füllungsgrad, welcher angibt, wie viele Fahrzeuge sich pro Längeneinheit auf der bestimmten Fahrspur befinden.

Anstelle von einzelnen Objekten (Fahrzeugen) wird bei dieser Ausführungsform eine stark abstrahierte Darstellung auf der Anzeige abgebildet, welche die einzelnen Fahrzeuge nicht mehr erkennen lässt. Stattdessen wird die entsprechende Fahrspur gemäß der Information eingefärbt oder in Form eines Musters dargestellt. Auf diese Weise kann die Dynamik der Nebenspur (d.h. einer Fahrspur neben der aktuellen Fahrspur des Fahrzeugs) angezeigt und verdeutlicht werden. Anhand der grafischen Darstellung kann der Fahrer beispielsweise eine hohe Durchschnittsgeschwindigkeit der Fahrzeuge auf der Nebenspur oder eine vergleichsweise hohe Anzahl von Fahrzeugen auf der Nebenspur (hohen Füllungsgrad) besser erfassen, als wenn einzelne Objekte mit einer Zusatzinformation auf der Nebenspur abgebildet werden.

Gemäß einer weiteren erfindungsgemäßen Ausführungsform ist der Sensor (oder ein bestimmter Sensor) der Vorrichtung in der Lage, eine Verfügbarkeitsinformation zu erfassen. Die Vorrichtung ist dabei in der Lage, diese Verfügbarkeitsinformation auf der Anzeige darzustellen. Dabei entspricht die Verfügbarkeitsinformation einer Verfügbarkeitsinformation aus folgender Verfügbarkeitsinformationsmenge, welche selbst umfasst:
- Eine Information über die Verfügbarkeit eines Mobilfunknetzes am aktuellen Ort des Fahrzeugs.
- Eine Information über die Verfügbarkeit eines WLAN-Netzes am aktuellen Ort des Fahrzeugs.
- Eine Information über die Verfügbarkeit von Car2X-Daten am aktuellen Ort des Fahrzeugs. Dabei ist insbesondere die Verfügbarkeit einer Car2X-Technik im Umfeld des aktuell von dem Fahrzeug befahrenen Fahrwegs zu verstehen.

Durch die Darstellung der entsprechenden Verfügbarkeitsinformation kann der Fahrer vorteilhafterweise gut abschätzen, wie gut das automatische Fahren in der entsprechenden Situation unterstützt wird. Beispielsweise können in Regionen mit einer hohen Verfügbarkeit eine verbesserte Navigation oder auch eine Video-Telefonie angeboten werden. Ein weiterer Vorteil besteht darin, dass sich der Fahrer durch die Darstellung der Verfügbarkeitsinformation stärker mit fahrbezogenen Inhalten beschäftigt und sich daher besser bewusst ist, in welcher Situation sich das automatisch gefahrene Fahrzeug aktuell befindet.

Die Verfügbarkeitsinformation kann dabei anhand eines oder mehrerer Symbole auf der Anzeige oder abstrakt in Form einer grafischen Darstellung auf zumindest einem Bereich der Anzeige abgebildet werden.

Beispielsweise kann eine Datendichte durch eine entsprechende Variation der Farbgebung im Umfeld des Fahrzeugs (beispielsweise grün für eine hohe Datendichte) auf der Anzeige erfolgen. Wenn ein bestimmtes Netz oder die Car2X-Daten nicht zur Verfügung stehen, kann dies durch ein entsprechendes Symbol auf der Anzeige angezeigt werden.

Im Rahmen der vorliegenden Erfindung kann auch ein Fahrzeug bereitgestellt werden, welches eine erfindungsgemäße Vorrichtung umfasst.

Die vorliegende Erfindung unterstützt den Fahrer beim Erfassen der Fahrsituation seines automatisch fahrenden Fahrzeugs, indem wichtige Regelobjekte, die Dynamik des Umfelds des Fahrzeugs und weitere Eigenschaften der Umgebung in einer animierten Darstellung und in Relation zu dem eigenen Fahrzeug dargestellt werden. Dadurch wird der Fahrer in die Lage versetzt, sich mit wenig Aufwand einen Überblick über die direkte Umgebung seines Fahrzeugs und deren Eigenschaften zu verschaffen, um so ein angemessenes Situationsbewusstsein zu erlangen. Darüber hinaus wird der Fahrer durch die vorliegende Erfindung in die Lage versetzt, die Zuverlässigkeit eines Systems zum automatischen Fahren eines Fahrzeugs zu überprüfen. Die auf der Anzeige dargestellten Regel- und Umgebungsobjekte können vom Fahrer auf eine einfache Weise mit der Realität abgeglichen werden, wodurch der Fahrer die Leistungsfähigkeit des Systems besser einschätzen und damit ein angemessenes Systemvertrauen aufbauen kann.

Im Rahmen der vorliegenden Erfindung kann auch ein Mobilgerät bereitgestellt werden, welches die erfindungsgemäße Vorrichtung umfasst.

Ein solches erfindungsgemäßes Mobilgerät könnte optische oder akustische Sensoren umfassen oder per Funkkommunikation Daten von einem Server beziehen, um Objekte in der Umgebung des Mobilgeräts (beispielsweise im Kontext einer auf dem Mobilgerät laufenden Navigations-Applikation) zu erfassen, zu bewerten und anzuzeigen.

Die vorliegende Erfindung ist insbesondere für Kraftfahrzeuge geeignet. Selbstverständlich ist die vorliegende Erfindung nicht auf diesen bevorzugten Anwendungsbereich beschränkt, da die vorliegende Erfindung auch für spurgeführte oder gleisgebundene Fahrzeuge sowie für Schiffe oder Flugzeuge eingesetzt werden kann. Die vorliegende Erfindung könnte jedoch auch außerhalb von Fortbewegungsmitteln in einem Mobilgerät eingesetzt werden, wie es vorab beschrieben ist.

Im Folgenden wird die vorliegende Erfindung anhand bevorzugter erfindungsgemäßer Ausführungsformen mit Bezug zu den Figuren im Detail beschrieben.

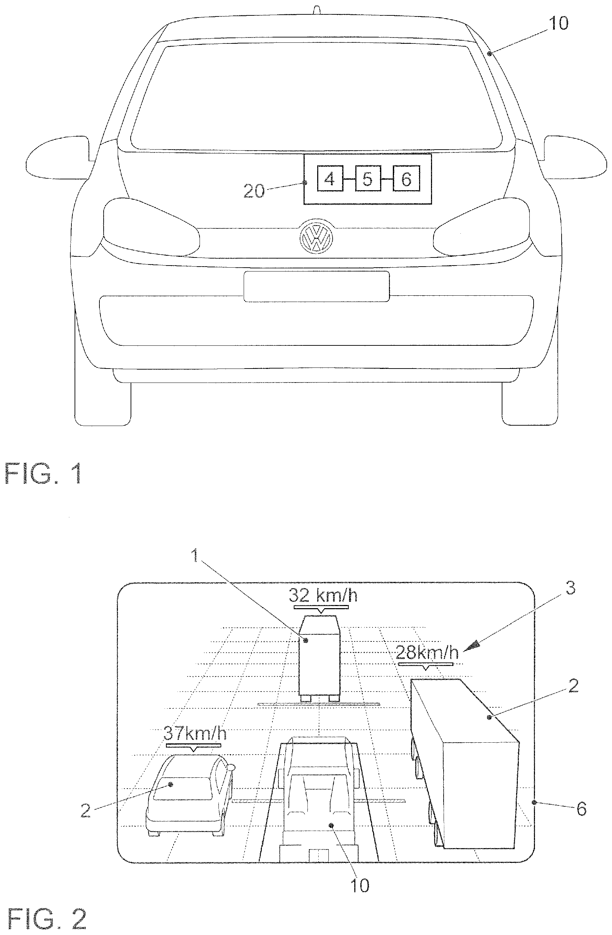

In Fig. 2 ist eine nicht-erfindungsgemäße Anzeige, welche das eigene Fahrzeug zusammen mit umgebenden Fahrzeugen zeigt, dargestellt.

In Fig. 1 ist ein erfindungsgemäßes Fahrzeug mit einer erfindungsgemäßen Vorrichtung dargestellt.

Die in Fig. 2 dargestellte Anzeige 6 zeigt das eigene Fahrzeug 10 zusammen mit Fahrzeugen 1, 2 im Umfeld des eigenen Fahrzeugs 10 in animierter Form. Im vorliegenden Fall wird das Führungsfahrzeug 1 und Fahrzeuge 2 auf der Nebenspur der Fahrspur des eigenen Fahrzeugs 10 dargestellt. Darüber hinaus wird für die Fahrzeuge 1, 2 im Umfeld des eigenen Fahrzeugs 10 jeweils eine Zusatzinformation (hier die Geschwindigkeit des jeweiligen Fahrzeugs) dargestellt. Diese Zusatzinformationen können auf Wunsch des Fahrers (beispielsweise durch die Betätigung der Lenkradtasten "Pfeil rechts" und "Pfeil links") dargestellt oder ausgeblendet werden.

In Fig. 1 ist ein erfindungsgemäßes Fahrzeug 10 dargestellt, welches eine erfindungsgemäße Vorrichtung 20 umfasst und zum automatischen Fahren ausgestaltet ist. Dabei umfasst die erfindungsgemäße Vorrichtung 20 ihrerseits einen Sensor 4, eine Steuerung 5 und eine Anzeige 6. Mit dem Sensor können Objekte 1, 2 im Umfeld des Fahrzeugs 10 erfasst werden. Die Vorrichtung 20 ist in der Lage, diese von dem Sensor erfassten Objekte zusammen mit dem Fahrzeug 10 in animierter Form auf der Anzeige 6 darzustellen.

### Bezugszeichenliste

- 1: Führungsfahrzeug
- 2: Fahrzeug auf Nebenspur
- 3: Zusatzinformation
- 4: Sensor
- 5: Steuerung
- 6: Anzeige
- 10: Fahrzeug
- 20: Vorrichtung

## Patentansprüche

1. Vorrichtung (20) für ein Fahrzeug (10), welches zum zumindest teilweisen automatischen Fahren ausgestaltet ist,
wobei die Vorrichtung (20) einen Sensor (4), eine Steuerung (5) und eine Anzeige (6) umfasst,
wobei der Sensor (4) zum Erfassen von Objekten (1, 2) im Umfeld des Fahrzeugs (10) ausgestaltet ist, und
wobei die Vorrichtung (20) ausgestaltet ist, um die Objekte (1, 2) zusammen mit dem Fahrzeug (10) in animierter Form auf der Anzeige (6) darzustellen,
wobei die Vorrichtung (20) ausgestaltet ist, um eines der Objekte als Regelobjekt zu identifizieren, wobei das Regelobjekt eine Ursache für ein automatisch durchgeführtes Fahrmanöver des Fahrzeugs (10) darstellt, und
wobei die Vorrichtung (20) ausgestaltet ist, um das Regelobjekt unterscheidbar von den anderen Objekten auf der Anzeige (6) darzustellen,
wobei die Vorrichtung (20) ausgestaltet ist, um mittels des Sensors (4) Zusatzinformationen (3) zu den Objekten (1, 2) zu erfassen und um zu ausgewählten der dargestellten Objekte (1, 2) jeweils mindestens eine der Zusatzinformationen (3) auf der Anzeige (6) darzustellen,
wobei diese Zusatzinformation einer Information, ob das entsprechende Objekt eine betriebsfähige Car2X-Technik aufweist, entspricht, und
wobei die Vorrichtung (20) ausgestaltet ist, um die Objekte auf einer bestimmten Fahrspur, welche einer aktuellen Fahrspur des Fahrzeugs (10) benachbart ist, abstrahiert in Form einer grafischen Darstellung der bestimmten Fahrspur darzustellen, wobei die grafische Darstellung der bestimmten Fahrspur eine Information über einen Verkehr auf der bestimmten Fahrspur umfasst, und
wobei die Information einer Information aus einer Informationsmenge entspricht, wobei die Informationsmenge umfasst:
• eine Geschwindigkeit, mit welcher sich die Fahrzeuge (2) auf der bestimmten Fahrspur bewegen, und
• ein Füllungsgrad, welcher angibt, wie viele Fahrzeuge (2) sich pro Längeneinheit auf der bestimmten Fahrspur befinden.

2. Vorrichtung nach Anspruch 1,
**dadurch gekennzeichnet,**
**dass** die Vorrichtung (20) ausgestaltet ist, um einen automatischen Fahrzustand, in welchem das Fahrzeug (10) automatisch fährt, zu erfassen und um in dem automatischen Fahrzustand die Objekte (1, 2) zusammen mit dem Fahrzeug (10) in animierter Form auf der Anzeige (6) darzustellen.

3. Vorrichtung nach Anspruch 1 oder 2,
**dadurch gekennzeichnet,**
**dass** die Vorrichtung (20) ausgestaltet ist, um die Objekte (1, 2) abhängig von Ergebnissen des Sensors (4) zu klassifizieren und um jedes Objekt (1, 2) in seiner Klasse unterscheidbar von anderen Klassen auf der Anzeige (6) darzustellen.

4. Vorrichtung nach Anspruch 3, **dadurch gekennzeichnet, dass** die Klasse jedes dargestellten Objektes einer von zumindest zwei Klassen aus einer Klassenmenge entspricht, wobei die Klassenmenge umfasst:
• einen Personenkraftwagen,
• einen Van,
• einen Lastkraftwagen,
• ein feststehendes Hindernis,
• ein Verkehrsschild,
• eine Brücke, und
• einen Tunnel.

## Claims

1. Device (20) for a vehicle (10) that is designed for at least partially automated driving,
wherein the device (20) comprises a sensor (4), a controller (5), and a display (6),
wherein the sensor (4) is designed for detecting objects (1, 2) in the surroundings of the vehicle (10), and wherein the device (20) is designed to depict the objects (1, 2) together with the vehicle (10) in animated form on the display (6),
wherein the device (20) is designed to identify one of the objects as a control object, wherein the control object represents a cause for an automatically performed driving maneuver of the vehicle (10), and wherein the device (20) is designed to depict the control object so as to be distinguishable from the other objects on the display (6),
wherein the device (20) is designed to detect additional information (3) relating to the objects (1, 2) by means of the sensor (4), and to depict on the display (6) at least one of the additional information items (3) relating to the selected displayed objects (1, 2), wherein this additional information corresponds to information as to whether the corresponding object has an operable Car2X technology, and
wherein the device (20) is designed to display the objects in a specific lane which is adjacent to a current lane of the vehicle (10), abstracted in the form of a graphical representation of the specific lane, wherein the graphical representation of the specific lane comprises information about traffic in the specific lane, and
wherein the information corresponds to information from an information set, wherein the information set comprises:
• a speed at which the vehicles (2) move in the specific lane, and
• a degree of filling which indicates how many vehicles (2) are located in the specific lane per unit of length.

2. Device according to claim 1,
**characterized in that**
the device (20) is designed to detect an automatic driving state in which the vehicle (10) is automatically driving, and in the automatic driving state to depict the objects (1, 2) together with the vehicle (10) in animated form on the display (6).

3. Device according to claim 1 or 2,
**characterized in that**
the device (20) is designed to classify the objects (1, 2) depending on results of the sensor (4), and to depict each object (1, 2) in its class so as to be distinguishable from other classes on the display (6).

4. Device according to claim 3, **characterized in that** the class of each depicted object corresponds to one of at least two classes of a set of classes, wherein the set of classes comprises:
• a passenger car,
• a van,
• a truck,
• a stationary obstacle,
• a traffic sign,
• a bridge, and
• a tunnel.

## Revendications

1. Dispositif (20) pour un véhicule (10) qui est équipé pour la conduite au moins partiellement automatique,
le dispositif (20) comprenant un capteur (4), un dispositif de commande (5) et un dispositif d'affichage (6),
le capteur (4) étant équipé pour détecter des objets (1, 2) autour du véhicule (10), et
le dispositif (20) étant équipé pour représenter les objets (1, 2) conjointement avec le véhicule (10) sous forme animée sur le dispositif d'affichage (6),
le dispositif (20) étant équipé pour identifier l'un des objets en tant qu'objet de régulation, l'objet de régulation représentant une cause pour une manœuvre de conduite du véhicule (10) effectuée automatiquement et
le dispositif (20) étant équipé pour représenter l'objet de régulation de manière discernable par rapport aux autres objets sur le dispositif d'affichage (6),
le dispositif (20) étant équipé pour détecter, au moyen du capteur (4), des informations complémentaires (3) relatives aux objets (1, 2) et pour représenter sur le dispositif d'affichage (6), par rapport aux objets (1, 2) sélectionnés représentés à chaque fois au moins l'une des informations complémentaires (3),
ces informations complémentaires correspondant à une information sur la présence ou non dans l'objet correspondant d'une technologie Car2X opérationnelle et
le dispositif (20) étant équipé pour représenter les objets sur une trajectoire déterminée, qui est proche d'une trajectoire actuelle du véhicule (10), de manière abstraite sous forme d'une représentation graphique de la trajectoire déterminée, la représentation graphique de la trajectoire déterminée comprenant une information sur le trafic sur la trajectoire déterminée et
l'information correspondant à une information parmi une quantité d'informations, la quantité d'information comprenant :
• une vitesse à laquelle les véhicules (2) se déplacent sur la trajectoire déterminée et
• un taux de remplissage qui indique le nombre de véhicules (2) se trouvant par unité de longueur sur la trajectoire déterminée.

2. Dispositif selon la revendication 1,
**caractérisé en ce que**
le dispositif (20) est équipé pour détecter un état de conduite automatique, dans lequel le véhicule (10) roule de manière automatique, et pour représenter, dans l'état de conduite automatique, les objets (1, 2) conjointement avec le véhicule (10) sous forme animée sur le dispositif d'affichage (6).

3. Dispositif selon la revendication 1 ou 2,
**caractérisé en ce que**
le dispositif (20) est équipé pour classer les objets (1, 2) en fonction de résultats du capteur (4) et pour représenter chaque objet (1, 2) dans sa classe de manière discernable des autres classes sur le dispositif d'affichage (6).

4. Dispositif selon la revendication 3, **caractérisé en ce que** la classe de chaque objet représenté correspond à l'une parmi au moins deux classes d'une quantité de classes, la quantité des classes comprenant :
• une voiture de tourisme,
• une camionnette,
• un camion,
• un obstacle fixe,
• un panneau de signalisation,
• un pont et
• un tunnel.
